Europäisches Patentamt

European Patent Office

Office européen des brevets

Veröffentlichungsnummer: **0 289 920**

**A2**

# EUROPÄISCHE PATENTANMELDUNG

Anmeldenummer: 88106698.9

Int. Cl.4: **B29B 11/10 , B29C 61/06**

Anmeldetag: 27.04.88

Priorität: 08.05.87 DE 3715277

Veröffentlichungstag der Anmeldung:
**09.11.88 Patentblatt 88/45**

Benannte Vertragsstaaten:
**AT BE CH DE ES FR GB IT LI NL SE**

Anmelder: **BASF Aktiengesellschaft**
**Carl-Bosch-Strasse 38**
**D-6700 Ludwigshafen(DE)**

Erfinder: **Seiler, Erhard, Dr.**
**Erpolzheimer Strasse 1**
**D-6700 Ludwigshafen(DE)**
Erfinder: **Kraemer, Albert**
**Weisenheimer Strasse 27**
**D-6700 Ludwigshafen(DE)**
Erfinder: **Ehrenstein, Gottfried, Prof.-Dr.**
**Schwarzenbergstrasse 60**
**D-3500 Kassel(DE)**
Erfinder: **Pornnimit, Benjamin**
**Heubnerstrasse 15**
**D-3500 Kassel(DE)**

Verfahren zur Herstellung hochsteifer und hochfester Extrudate aus teilkristallinen Thermoplasten.

Verfahren zur kontinuierlichen Herstellung hochsteifer und hochfester Extrudate aus teilkristallinen Thermoplasten, gekennzeichnet durch

a) Aufschmelzen des teilkristallinen Thermoplasten in einem Extruder unter einem Druck von mindestens 300 - 10 000 bar, vorzugsweise 400 - 2000 bar, auf eine Massetemperatur, die mindestens 20, vorzugsweise mindestens 30 Grad höher liegt als die Schmelztemperatur des Thermoplasten, danach

b) Einbringen der Kunststoffschmelze in eine Orientierungszone, in der sich der Querschnitt des Massestromes kontinuierlich verjüngt, wobei der Winkel zwischen der Extruderlängsachse und der Querschnittsverjüngung kleiner als 45°, vorzugsweise kleiner als 30° ist, danach

c) Abkühlen der Kunststoffschmelze unter Beibehaltung des hohen Drucks von 300 - 10 000, vorzugsweise 400 - 2 000 bar in einer ersten Abkühlzone $A_1$ in Stufen oder kontinuierlich auf eine Temperatur unterhalb des Kristallitschmelzpunkts aber oberhalb des Vicaterweichungspunkts des eingesetzten teilkristallinen Kunststoffs, unter endgültiger Formgebung danach

d) Abkühlen der Kunststoffmasse in einer zweiten Abkühlzone $A_2$ ohne weitere Verformung auf eine Temperatur unterhalb des Vicaterweichungspunktes des eingesetzten Kunststoffs, danach

e) Aufbringen einer Abzugskraft auf das aus der Extruderdüse austretende Extrudat, die ausreicht, die zwischen der ersten und zweiten Abkühlzone sowie innerhalb der zweiten Abkühlzone $A_2$ auftretende Reibung zu überwinden, ohne daß der im Extruder herrschende Innendruck von 300 - 10 000, vorzugsweise 400 bis 2000 bar, unterschritten wird, und ohne daß die Form des Extrudats dabei verändert wird.

EP 0 289 920 A2

## Verfahren zur Herstellung hochsteifer und hochfester Extrudate aus teilkristallinen Thermoplasten

Die vorliegende Erfindung betrifft ein Verfahren zur kontinuierlichen Herstellung hochsteifer und hochfester Extrudate aus teilkristallinen Thermoplasten.

Thermoplastisch verarbeitbare Kunststoffe können durch die während des Verarbeitungsprozesses auftretenden Verformungskräfte orientiert werden. Gelingt es, diese Orientierung einzufrieren, so kann man Formkörper erhalten, die in Orientierungsrichtung eine erhöhte Steifigkeit und Festigkeit aufweisen.

Bei der Verarbeitung aus der Schmelze mittels herkömmlicher Extrusion ist ein Einfrieren der aufgebrachten Orientierung allerdings sehr schwierig und gelingt nur sehr unvollkommen, da die Kunststoffschmelze sofort in den unorientierten Zustand zurückgeht, sobald die aufgebrachten Scherkräfte z.B. durch Austritt der Schmelze aus dem Extruder entfallen. Hohe Orientierungsgrade und damit hohe Steifigkeiten und Festigkeiten wurden daher bisher nur durch Deformationsprozesse unterhalb der Schmelztemperatur des Kunststoffs erzielt. Einige Verfahren dieses Festphasendeformationsprozesses sind das direkte Verstrecken, das kontinuierliche Recken von Fäden, die hydrostatische Extrusion, das Ziehen durch eine Düse und die Festkörperextrusion.

Bei dem Schmelzedeformationsprozeß wird die Orientierung bereits in der Schmelze aufgebracht. Die während der Strömung durch die Kapillare erzeugte Orientierung der Kettenmoleküle und die dabei induzierte Kristallisation wird bei der anschließenden Abkühlung unter Druck fixiert. Bekannte Schmelzedeformationsprozesse sind das Faserspinnverfahren sowie Extrusionsversuche am Kapillarviskosimeter. Die dabei entstehenden Strukturen beruhen auf einer Orientierung der Makromoleküle in der Schmelze, woraus eine neue Kristallstruktur entsteht, die sich grundsätzlich von den sphärolithischen und fibrillären Strukturen die bei der Festphasendeformation entstehen, unterscheidet.

Kürzlich wurde ein neues Verfahren bekannt, mit dem es grundsätzlich gelang, durch einen Schmelzedeformationsprozeß in einem Extrusionswerkzeug hochfeste, hochsteife extrudierte Drähte mit einem Durchmesser bis zu 4 mm herzustellen (B. Pornnimit: Technologie der Eigenverstärkung von Thermoplasten; Tagungsband S. 123-136, 26.-27.03.87 in Kassel).

Gegenüber konventionellem Extrudat zeichnet sich das hochfeste Extrudat durch weitgehend parallel zur Extrusionsrichtung orientierte Molekülketten, homogene Transparenz mit hoher Steifigkeit und Festigkeit in Orientierungsrichtung und eine hohe Temperaturbeständigkeit aus.

Dieser nächstliegende Stand der Technik reicht zwar für grundsätzliche wissenschaftliche Untersuchungen aus, läßt aber aus folgenden Gründen eine technische Realisierung nicht zu:

1. Das aus der Extruderdüse frei austretende Extrudat hat noch eine so hohe Temperatur und Weichheit, daß es sich ohne Verformung nicht aufwickeln läßt. Wird eine auch nur geringe Zugkraft, die zur kontinuierlichen Entnahme und Aufbringen z.B. auf eine Rolle notwendig ist, aufgebracht, wird der Strang gestreckt und eingeschnürt.

2. Versucht man, die Austrittstemperatur des Strangs auf eine Temperatur abzusenken, die einen steifen Strang erzeugt, so blockiert die Düse sofort, wobei die Extruderschnecke oder der Antrieb Schaden nehmen kann.

3. Geringe Temperatur-oder Druckschwankungen, wie sie bei einer kontinuierlichen Extrusion zwangsläufig auftreten, führen, wenn nicht weitere Maßnahmen vorgenommen werden, zu Qualitätsschwankungen oder zum Stillstand der Anlage.

4. Die beschriebene einstufige Abkühlzone gestattet nur extrem niedrige Durchsätze (ca. 10 - 20 mm/min. Extrudat), die für eine technische Realisierung unrealistisch sind.

5. Ohne zusätzliche Kenntnisse läßt sich dieser bekannte Stand der Technik nicht nacharbeiten, da wesentliche Angaben zum Verfahren fehlen.

Es stellte sich daher die Aufgabe ein störungsfreies und reproduzierbares kontinuierliches Extrusionsverfahren für hochsteife und hochfeste Extrudate zu entwickeln, das wesentlich höhere als die vorstehend unter 4. genannten Extrudatdurchsätze erlaubt.

Diese Aufgabe wurde gelöst durch ein Verfahren der eingangs genannten Art, gekennzeichnet durch

a) Aufschmelzen des teilkristallinen Thermoplasten in einem Extruder unter einem Druck von mindestens 300-10.000 bar, vorzugsweise 400-2.000 bar, auf eine Massetemperatur, die mindestens 20, vorzugsweise mindestens 30 Grad höher liegt als die Schmelztemperatur des Thermoplasten, danach

b) Einbringen der Kunststoffschmelze in eine Orientierungszone, in der sich der Querschnitt des Massestromes kontinuierlich verjüngt, wobei der Winkel zwischen der Extruderlängsachse und der Querschnittsverjüngung kleiner als 45°, vorzugsweise kleiner als 30° ist, danach

c) Abkühlen der Kunststoffschmelze unter Beibehaltung des hohen Drucks von 300 - 10.000. vorzugsweise 400 - 2.000 bar in einer ersten Abkühlzone A· in Stufen oder kontinuierlich auf eine Temperatur unterhalb des Kristallitschmelzpunkts aber oberhalb des Vicaterweichungspunkts des eingesetzten teilkristallinen Kunststoffs, unter endgültiger Formgebung, danach

d) Abkühlen der Kunststoffmasse in einer zweiten Abkühlzone A$_2$ ohne weitere Verformung auf eine Temperatur unterhalb des Vicaterweichungspunktes, danach

e) Aufbringen einer Abzugskraft auf das aus der Extruderdüse austretende Extrudat. die ausreicht, die zwischen der ersten und zweiten Abkühlzone sowie innerhalb der zweiten Abkühlzone A$_2$ auftretende Reibung zu überwinden, ohne daß der im Extruder herrschende Innendruck von 300 - 10.000. vorzugsweise 400 bis 2000 bar, unterschritten wird, und ohne daß die Form des Extrudats dabei verändert wird.

Weitere Merkmale der Erfindung sind Gegenstand der Unteransprüche 2 bis 7.

Aus Gründen der höheren Wirtschaftlichkeit des erfindungsgemäßen Verfahrens und der günstigeren Größenverhältnisse zwischen Extrudergröße und Produktdurchsatz enthalten die zur Durchführung des erfindungsgemäßen Verfahrens geschaffenen Extrusionswerkzeuge mehrere, vorzugsweise gleichartig aufgebaute Düsenbohrungen mit den kennzeichneden Merkmalen der Ansprüche 1 bis 3.

Als Thermoplastmatrices kommen grundsätzlich alle hochmolekularen teilkristallinen Thermoplaste in Betracht. Bevorzugt sind jedoch lineares Polyethylen und hochisotaktisches Polypropylen. Besonders bevorzugt ist ein lineares hochmolekulares Polyethylen mit einer Rohdichte >0.95 g/cm$^3$ und einem Schmelzindex, gemessen bei 190°C und 2.16 kg Last von <5 g/10 min.

Das Gleit/Reibe-Verhalten kann durch geeignete Zusätze verbessert werden, die entweder mit dem Granulat in den Extruder gegeben, auf das Granulat aufgetrommelt oder in einem vorgeschalteten Konfektionierschritt in das Polymere eingearbeitet werden. Geeignete Zusätze sind z.B. Polytetrafluorethylen, Graphit, Kohlenstoffasern oder -Whisker, Talkum und Metallseifen wie Ca-stearat, Zn-stearat etc.

Es versteht sich von selbst, daß die teilkristallinen Thermoplaste noch andere Polymerkomponenten enthalten können. Dies führt zwar häufig zu Einbußen in der erreichbaren Steifigkeit und Festigkeit, kann aber für andere Eigenschaften wie Härte, Wärmeformbeständigkeit, Chemikalienresistenz etc. von Vorteil sein.

So kann das lineare Polyethylen z.B. Anteile an ultrahochmolekularem linearem Polyethylen enthalten. Ebenso kann z.B. hochisotaktisches Polypropylen (PP) mit enger Molmassenverteilung untergeordnete Anteile an sehr hochmolekularem Polypropylen enthalten. Vorteilhaft sind auch Mischungen aus HDPE (high density polyethylene) mit untergeordneten Anteilen an LLDPE (linear low density polyethylene) oder Mischungen aus Polypropylen mit untergeordneten Anteilen an Ethylen/Propylen-Copolymeren sowie Polypropylen-Blockcopolymerisaten, letztere vorzugsweise mit hochisotaktischen PP-Blöcken sowie Mischungen verschiedener PP-Typen untereinander oder in Mischung mit HDPE.

Weiterhin können die teilkristallinen Thermoplaste noch weitere Zusätze wie Farbstoffe, Pigmente, Nucleierungsmittel, Verarbeitungshilfsmittel, Stabilisatoren, Antistatika oder flammhemmende Stoffe in wirksamen Mengen enthalten.

Zur Durchführung des erfindungsgemäßen Verfahrens geeignete Extruder bestehen grundsätzlich aus den üblichen Baugruppen wie:

Antrieb: Elektromotor, Untersetzungsgetriebe, Schneckenrückdrucklager

Plastifiziereinheit: Zylinder mit Formmasseaufgabe, Zylinderheizung, Zylinderkühlung, Plastifizierschnecke

Schalt-und Regelschrank: mit den zu den einzelnen Regelzonen zugehörigen Regelelementen

Da für das erfindungsgemäße Verfahren hohe Drücke im Extrusionswerkzeug erforderlich sind, eignen sich hierzu besonders Extruder mit glatter Einzugszone, mit Extruderschnecke deren Einzugszone zwischen 9 und 11 L/D ist, mit der Verdichtung 3 : 1, Doppelschneckenextruder mit gegenläufigen Schnecken, deren Schnecken kleine Kopf-und Flankenspiele aufweisen, sowie bevorzugt Extruder mit genuteter Einzugszone, gekühlter Nutbuchse, Wärmetrennung und zugehörigen flachen Gangtiefen der Schnecke bei kleiner Verdichtung 1,3 : 1.

Mit einem geeigneten Extruder der vorstehend beschriebenen Art wird die Formmasse unter Normaltemperatur von 20 - 25°C als Granulat oder Grieß im Extrudertrichter aufgegeben und über die Zylinderöffnung durch die Schnecke aufgenommen. Durch das Zusammenspiel der Reibung Granulat/Zylinder und Temperaturleitung wird die Formmasse erwärmt, verdichtet, aufgeschmolzen, homogenisiert und bis auf den für das Verfahren erforderlichen Druck komprimiert.

Die für die Erfindung charakteristischen Verfahrensdaten sind im Anspruch 1 zusammengefaßt.

Ein bevorzugtes Extrusionswerkzeug besteht z.B. aus einem Schmelzekanal, der mit dem gleichen Zylinderdurchmesser wie dem des Extruders beginnt. Dieser Schmelzekanal verjüngt sich vom Eingangsdurchmesser mit dem Winkel α zur Extrusionsachse von ca. 30° auf den Durchmesser des herzustellenden Halbzeugs, wobei die Werkzeugdurchmesser in den einzelnen Zonen, wie folgt beschrieben. gemäß der

3

jeweiligen Volumenkontraktion des zu verarbeitenden Werkstoffs angepaßt sind.

Das Werkzeug wird im ersten Teil der Orientierungszone mit einer Heizung versehen. Im zweiten Teil der Orientierungszone hat das Werkzeug am Außenmantel eine Temperierzone mit einem Zwangsumlaufkanal. Im dritten Werkzeugteil ist die Scherdeformation weitestgehend abgeschlossen, wobei der Schmelzestrang die Halbzeugabmessung vergrößert durch das Schwindmaß, erreicht hat. Im vierten Teil des Werkzeugs wird der Strang mittels der Außenkühlung so weit abgekühlt, daß alle aufgeprägten Orientierungen im Halbzeug "eingefroren" werden und der Strang eine Temperatur unterhalb des Vicatpunktes erreicht hat.

In diesem Zustand ist er auch in der Lage die im gekühlten Teil des Werkzeugs entstehenden Reibungskräfte zu überwinden.

Die einzelnen zuvor beschriebenen Werkzeugteile werden mit einer jeweils spezifischen Temperatur betrieben, d.h. im Werkzeug, an der Wand der Schmelze-und Strangführung, muß eine Temperatur herrschen, die dem Funktionsablauf entspricht.

In den einzelnen Werkzeugzonen sind dazu sehr unterschiedliche Temperaturen einzustellen. Diese können nur erreicht werden, ohne große gegenseitige Beeinflussung, wenn die einzelnen Segmente 1 bis 4 voneinander wärmegetrennt sind.

Die Werkzeuge weisen dazu Luftspalte auf und am eigentlichen Strangprofil Zentrierbuchsen mit reduzierten Radialquerschnitten, die im Einbauzustand das Maß der zulässigen Flächenpressung erreichen.

Um Halbzeuge mit wirtschaftlich vertretbaren Durchsatzleistungen herstellen zu können, werden große Halbzeugabmessungen vorzugsweise in Einstrang-, kleine Abmessungen vorzugsweise in Mehrfachstrangwerkzeugen gefertigt.

Bei der Abkühlung der Kunststoffmasse in der Abkühlzone $A_2$ unter den Vicaterweichungspunkt kann zunächst kein Extrudat erhalten werden, da die Düse "einfriert", wodurch der Extrusionsdruck über den technisch tolerierbaren Druck ansteigt, und unter Umständen sogar die Notabschaltung des Extruders ausgelöst wird.

Es wurde gefunden, daß mit einer Abzugseinrichtung, die in der Lage ist, eine hohe Abzugskraft auf das aus der Düse austretende Extrudat einzuleiten, eine störungsfreie und reproduzierbare Herstellung hochsteifer und hochfester Extrudate durchgeführt werden konnte.

Abzugseinrichtungen sind an sich bekannt. Es können im Prinzip alle langsam laufenden gängigen Greifer-, Raupen-und Rollenabzüge verwendet werden.

Als Meßkriterien zur Bestimmung der Eigenschaften der verwendeten teilkristallinen Kunststoffe sowie der daraus hergestellten hochsteifen und hochfesen Extrudate dienen folgende Parameter:

1. Schmelzpunkt

Die Schmelztemperatur der teilkristallinen Kunststoffe wird nach der bekannten und allgemein verwendeten DSC (Differential Scanning Colorimetry)-Methode ermittelt. Als Schmelzpunkt wird das Maximum des exothermen Schmelzpeaks herangezogen. Die Aufheizgeschwindigkeit beträgt 20°/min., die Einwaage 1 mg.

2. Vicaterweichungspunkt

Wie bei diesen und ähnlichen Kunststoffen üblich, wird der Erweichungspunkt nach Vicat B 50 ermittelt. Die Methode ist genormt (DIN 53 460).

3. Zugelastizitätsmodul

Als gängiges Maß für die Steifigkeit eines Kunststoffs wird der Zugelastizitätsmodul angegeben, dessen Messung genormt ist (DIN 53 457). In Abweichung von der Norm aber ohne Verfälschung der Aussage wurde bei den Messungen in den Beispielen nicht die übliche Probenform des Zugstabs gewählt, sondern das nach dem erfindungsgemäßen Verfahren hergestellte Extrudat mit rundem Querschnitt von 4 mm gewählt, da jede weitere Umformung eine Veränderung der mechanischen Eigenschaften zur Folge hätte.

## 4. Reißfestigkeit

Diese Methode ist ebenfalls genormt (DIN 53 455). Auch hier wird am Extrudat und nicht an Zugstäben gemessen. Allerdings bereitete das Einspannen der Extrudate und das Halten in den Klemmbacken bei der hohen Last bis zum Bruch gewisse Schwierigkeiten. Die Probekörper rutschten noch vor Erreichen der Bruchlast aus den Klemmbacken. Daher wurden die Enden der Probekörper im Einspannbereich durch Warmpressen unterhalb des Schmelzpunkts des Kunststoffs abgeflacht und verbreitert und in ein hochfestes und hochzähes glasfaserverstärktes Epoxidharz eingebettet. Obwohl auch diese Methode nicht voll befriedigt, gibt sie doch gute Anhaltspunkte für die Beurteilung der Festigkeit der hochsteifen und hochfesten Extrudate.

## 5. Dichte

Die Dichtemessung wird gemäß DIN 53 479 durchgeführt. Sie ist in g/cm³ angegeben.

## 6. Schmelzindex

Die Bestimmung des Schmelzindex ist ebenfalls genormt (DIN 53 735). Es wird bei einer Massetemperatur der Kunststoffschmelze (bei HDPE) von 190°C und einer Last von 2,16 kg bzw. 5 kg (bei PP) gemessen. Die Maßeinheit ist g/10 min.

## 7. Bestimmung der isotaktischen Anteile von Polypropylen

Diese Bestimmung erfolgt üblicherweise durch Extraktion mit n-Heptan oder Xylol und ist in DIN 53 738 ausführlich beschrieben. Es wurde Xylol als Extraktionsmittel verwendet. Der isotaktische Anteil entspricht dem Xylol-unlöslichen Polypropylenanteil in Prozent.

Nachstehend wird die Erfindung anhand der Beispiele 1 bis 3 näher erläutert.

An einem konventionellen Einschneckenextruder der Fa. Schwabenthan GmbH, Berlin, Typ Polytest 30P, mit glattem Zylinder und Dreizonenschnecke, Schneckendurchmesser d = 30 mm, l/d Verhältnis = 24, wurden hochfeste und hochsteife Extrudate kontinuierlich hergestellt.

Das Extrusionswerkzeug mit zwei Abkühlzonen (drei Temperierzonen) hat einen Eingangsdurchmesser von 30 mm, einen Verjüngwinkel von 30° und einen Düsenausgangsdurchmesser von 4 mm. Nach dem Werkzeug arbeitet eine Greifer-Abzugsvorrichtung für das feste Extrudat. Die gesamte Länge der Abkühlzone $A_1$ und Abkühlzone $A_2$ betägt 205 mm.

Die Maschineneinstellparameter, Temperaturprofil im Extruder, Schneckendrehzahl, Temperaturprofil im Extrusionswerkzeug und der Extrusionsdruck zur Erzeugung hochfester und hochsteifer Extrudate sind in Tabelle 1 für folgende zu untersuchende Materialien zusammengestellt:

Beispiel 1

Kommerzielles Polyethylen hoher Dichte (PE-HD) Lupolen 6021 D (Hersteller BASF) mit einem MFI 190/2,16 = 0,2 [g/10 min.] und einer Dichte von 0,96 g/cm³.

Beispiel 2

Hochisotaktisches Polypropylen Homopolymerisat (PP) (isotaktischer Anteil 97,5 %) mit einem MFI 190/5 = 0,15 [g/10 min.] und einer Dichte von 0,904 g/cm³.

Beim Vergleich einiger mechanischer Eigenschaften der hochfesten und hochsteifen Extrudate mit einem unter Standardbedingungen hergestellten Extrudat (normales Extrudat) liegt die Steifigkeits-und Festigkeitserhöhung für Polyethylen um mehr als den Faktor 7 und für Polypropylen um mehr als den Faktor 2 höher (s. Tabelle 2).

Tabelle 1   Versuchsparameter zur Herstellung hochsteifer und hochfester Extrudate aus HDPE (Beispiel 1) und PP (Beispiel 2)

| Material | Druck | | EXTRUDER | | | | EXTRUSIONSWERKZEUG | | | | | |
|---|---|---|---|---|---|---|---|---|---|---|---|---|
| | P | n | V | I | II | III | 1 | 2 | 3 | 4 | 5 | 6 |
| HDPE | 900 | 15 | 450 | 100 | 160 | 190 | 170 | 140 | 130 | 120 | 70 | 80 |
| PP | 1100 | 20 | 600 | 165 | 200 | 210 | 180 | 165 | 150 | 130 | 80 | 90 |

P = Extrusionsdruck in bar
n = Schneckendrehzahl in U./min
$V_E$ = Extrusionsgeschwindigkeit in mm/min
I = Temperatur der Einzugszone des Extruders in °C
II = Temperatur in der Kompressionszone des Extruders in °C
III = Temperatur vor der Orientierungszone in °C
1 = Temperatur im Extrusionswerkzeug in der Orientierungszone in °C
2 = Temperatur im Extrusionswerkzeug in der 1. Stufe der Abkühlzone $A_1$ in °C
3 = Temperatur im Extrusionswerkzeug in der 2. Stufe der Abkühlzone $A_1$ in °C
4 = Temperatur im Extrusionswerkzeug in der 3. Stufe der Abkühlzone $A_1$ in °C
5 = Temperatur im Extrusionswerkzeug in der Abkühlzone $A_2$ in °C
6 = Temperatur des Extrudats beim Austritt aus der Düse in °C

Tabelle 2   Vergleich einiger mechanischer Eigenschaften von hochfesten und normalen Extrudaten aus PE-HD und PP

| | Material | normal | | hochfest, hochsteif | |
|---|---|---|---|---|---|
| | | E-Modul | Zugfestig-keit | E-Modul | Zugfestig-keit |
| | | $[N/mm^2]$ | $[N/mm^2]$ | $[N/mm^2]$ | $[N/mm^2]$ |
| Beispiel 1 | HDPE | 1 400 | 29 | 14 000 | 240 |
| Beispiel 2 | PP | 1 300 | 32 | 4 500 | 80 |

Beispiel 3

Mit einem Extruder mit genuteter Einzugszone der Fa. Barmag, Remscheid. Typ 45/25 D. Schneckendurchmesser 45 mm, Schneckenlänge LD-Verhältnis 25 wurden hochfeste und hochsteife Stäbe in Mehrfachextrusion hergestellt.

Das Extrusionnswerkzeug mit 8 x 10 mm Durchmesser hatte einen Verjüngungswinkel von 10°.
Abkühlzone $A_1$ mit 3 Temperierstufen
Abkühlzone $A_2$ mit 2 Temperierstufen
Länge gesamt 195 mm
8 Stück gleich aufgebaute Düsenbohrungen
Extrusionsbedingungen s. Tabelle 3

Formmasse Lupolen 6021 D
MFI 190/2,16 = 0,2 g/10 min.
Dichte = 0,96 g/cm$^3$

Tabelle 3 Extrusionsbedingungen

| Material | Druck P bar | Dreh-zahl n 1/min | Durch-satz kg/h | Dreh-zahl n 1/min | EXTRUDER | | | | DÜSE | | | | |
|---|---|---|---|---|---|---|---|---|---|---|---|---|---|
| | | | | | EZ | I | II | III | A$_1$ | | | A$_2$ | |
| Lupolen 6021 D | 850 | 30 | 20 | 30 | 20 | 170 | 170 | 170 | 160 | 140 | 120 | 80 | 40 |

Tabelle 4 Vergleich einiger mechan. Eigenschaften der Extrudate

| normal | | hochfest, hochsteif | |
|---|---|---|---|
| E-Modul [N/mm$^2$] | Zugfestigkeit [N/mm$^2$] | E-Modul [N/mm$^2$] | Zugfestigkeit [N/mm$^2$] |
| 1 300 | 29 | 12 000 | 220 |

Es muß noch einmal betont werden, daß es sich bei Verwendung der Abzugseinrichtung nicht um einen Festphasendeformationsprozeß handelt, da die Abzugsvorrichtung nur die Aufgabe der Verringerung des Werkzeugwiderstands und des Transports des Extrudats hat und nicht die der Verstreckung des Extrudats.

Den Beweis hierzu liefert der unveränderte Durchmesser: das kontinuierlich auf eine Rolle vom Durchmesser 1 m aufgewickelte hochfeste und hochsteife Extrudat besitz den gleichen Durchmesser wie am Düsenausgang. Abzugskraft der Abzugsvorrichtung und Abzugsgeschwindigkeit sind so einzustellen, daß sich der Werkzeugwiderstand im Extrusionswerkzeug an der Stelle, wo die orientierte Schmelze zu einer hochfesten Struktur unter hohem Druck kristallisiert, verringert und ein Blockieren und Verstopfen der Düse sicher verhindert wird. Dabei darf der hohe Extrusionsdruck von 900 bar nicht abgebaut werden.

Mit dem erfindungsgemäßen Verfahren ist man in der Lage, hochfeste und hochsteife Extrudate unter sehr hohem Druck und beachtlich hoher Extrusionsgeschwindigkeit zu extrudieren. Dies ist ein bedeutender Schritt zu einer wirtschaftlichen Herstellung von hochfesten Extrudaten.

## Ansprüche

1. Verfahren zur kontinuierlichen Herstellung hochsteifer und hochfester Extrudate aus teilkristallinen Thermoplasten, gekennzeichnet durch

a) Aufschmelzen des teilkristallinen Thermoplasten in einem Extruder unter einem Druck von mindestens 300 - 10 000 bar, vorzugsweise 400 - 2 000 bar, auf eine Massetemperatur, die mindestens 20, vorzugsweise mindestens 30 Grad höher liegt als die Schmelztemperatur des Thermoplasten. danach

b) Einbringen der Kunststoffschmelze in eine Orientierungszone, in der sich der Querschnitt des Massestromes kontinuierlich verjüngt, wobei der Winkel zwischen der Extruderlängsachse und der Querschnittsverjüngung kleiner als 45°, vorzugsweise kleiner als 30° ist, danach

c) Abkühlen der Kunststoffschmelze unter Beibehaltung des hohen Drucks von 300 - 10 000, vorzugsweise 400 - 2 000 bar in einer ersten Abkühlzone $A_1$ in Stufen oder kontinuierlich auf eine Temperatur unterhalb des Kristallitschmelzpunkts, aber oberhalb des Vicaterweichungspunkts des eingesetzten teilkristallinen Kunststoffs, unter endgültiger Formgebung danach

d) Abkühlen der Kunststoffmasse in einer zweiten Abkühlzone $A_2$ ohne weitere Verformung auf eine Temperatur unterhalb des Vicaterweichungspunktes des eingesetzten Kunststoffs, danach

e) Aufbringen einer Abzugskraft auf das aus der Extruderdüse austretende Extrudat, die ausreicht, die zwischen der ersten und zweiten Abkühlzone sowie innerhalb der zweiten Abkühlzone $A_2$ auftretende Reibung zu überwinden, ohne daß der im Extruder herrschende Innendruck von 300 - 10 000, vorzugsweise 400 bis 2000 bar, unterschritten wird, und ohne daß die Form des Extrudats dabei verändert wird.

2. Verfahren nach Anspruch 1, dadurch gekennzeichnet, daß die Abkühlung der Kunststoffschmelze in der ersten Abkühlzone $A_1$ in mindestens zwei Stufen erfolgt, wobei die thermische Trennung vor der ersten Stufe, vor der zweiten Stufe und gegebenenfalls vor den weiteren Stufen durch einen Luftspalt erfolgt und als Werkstoff eine Eisenlegierung mit möglichst geringer Wärmeleitfähigkeit verwendet wird.

3. Verfahren nach Anspruch 1 und 2, dadurch gekennzeichnet, daß die Verjüngung des Massestromquerschnitts in der Orientierungszone unter einem Winkel von kleiner 30 Grad, vorzugsweise zwischen 5 und 20 Grad erfolgt, und die Orientierungszone mit dem sich verjüngenden Querschnitt teilweise oder vollständig in die Abkühlzone $A_1$ hineinreicht.

4. Verfahren nach Anspruch 1 bis 3, dadurch gekennzeichnet, daß der teilkristalline Thermoplast ein lineares Polyethylen mit einer Dichte von >0,95 g/cm$^3$ und einem Schmelzindex, gemessen bei 190°C und 2,16 kg Last, von <5 g/10 min. ist, das in Extrusionsrichtung einen Zug-Elastizitätsmodul von mindestens 10 000 N/mm$^2$ und eine Reißfestigkeit von mindestens 200 N/mm$^2$ besitzt.

5. Verfahren nach Anspruch 1 bis 3, dadurch gekennzeichnet, daß der teilkristalline Thermoplast ein hochisotaktisches Polypropylen (isotakt. Anteil mind. 96 %) mit einem Schmelzindex, gemessen bei 190°C und 5 kg Belastung von <2, vorzugsweise <0,5 g/10 min. ist.

6. Verfahren nach Anspruch 1 bis 5, dadurch gekennzeichnet, daß der teilkristalline Thermoplast Zusätze enthält, die die Reibung herabsetzen und das Gleiten fördern, wie z.B. PTFE, Graphit oder Metallseifen, wie Zn-stearat oder Ca-stearat.

7. Verfahren nach Anspruch 1 bis 6, dadurch gekennzeichnet, daß die hochsteifen und hochfesten Extrudate Rundstäbe, Rohre, Stangen mit quadratischem bzw. rechteckigem Querschnitt, Platten oder Profile sind.